# EUROPEAN PATENT SPECIFICATION

(11) **EP 3 469 216 B1**
(45) Date of publication and mention of the grant of the patent: **17.09.2025**
(21) Application number: 17725727.6
(22) Date of filing: 16.05.2017
(51) Int. Cl.: F04D 19/04, F04D 27/00, F04D 27/02

(54) **PUMP ASSEMBLY COMPRISING AN ACCELEROMETER AND METHOD OF ANALYZING DATA RECEIVED FROM AN ACCELEROMETER OF A PUMP**
PUMPENANORDNUNG MIT EINEM BESCHLEUNIGUNGSSENSOR UND VERFAHREN ZUR ANALYSE VON DATEN EINES BESCHLEUNIGUNGSSENSORS EINER PUMPE
ENSEMBLE DE POMPE COMPRENANT UN ACCÉLÉROMÈTRE ET MÉTHODE D'ANALYSE DES DONNÉES REÇUES D'UN ACCÉLÉROMÈTRE D'UNE POMPE

(30) Priority: 13.06.2016 GB 201610244
(43) Date of publication of application: 17.04.2019
(73) Proprietor: Edwards Limited, Burgess Hill, Sussex RH15 9TW (GB)
(72) Inventor: HAYLOCK, James Alexander, Eastbourne Sussex BN22 9BA (GB); PATEY, Alexander James, Burgess Hill Sussex RH15 9TW (GB); SIMMONDS, Michael, Burgess Hill Sussex RH15 9TW (GB)
(74) Representative: Norton, Ian Andrew
(86) International application number: PCT/GB2017/051362
(87) International publication number: WO 2017/216514

(56) References cited:
- EP-A2- 0 851 127
- CN-A- 101 187 589
- DE-U1- 202015 003 927
- GB-A- 2 507 501
- US-A1- 2004 064 291

## Description

### FIELD OF THE INVENTION

The invention relates to pump assemblies, methods and computer programs and in particular to monitoring the condition of a pump in such an assembly.

### BACKGROUND

Pumps are precision instruments manufactured with tightly controlled tolerances which require careful use and regular servicing to maintain condition. The wear of moving parts and the requirement for servicing will vary with type of use and characteristics of the pump. Furthermore, misuse or accidental knocks may damage parts and trigger an unexpected servicing or repair requirement. Operation of the pump in a compromised or worn condition can lead to further damage.

DE202015003927 discloses a pump with a motor, controller and accelerometer for sensing the orientation of the pump and vibrations of the bearings and where the vibrations exceed a limit control electronics issues a warning or stops the motor.

EP0851127 discloses a diagnostic apparatus for vacuum pumps where vibrations are detected and a spectral analysis is done so that peaks at certain frequencies due to vibrations of particular components can be compared to thresholds. The theoretical frequency of the rotor is used in this analysis and is derived from signals from the control and feed unit that controls the motor.

CN101187589 discloses a system that measures vibrations and uses this to determine that a rotor is not aligned properly and adjusts the dynamic balance using the magnetic bearings. The vibrations of the rotor are sensed and the rotor speed and phase signals are collected, and a filtering process performed on the signals that depends on the speed of the rotor and allows the magnetic bearings to be adjusted to align the rotor.

It would be desirable to be able to provide a means of detecting the condition of a pump.

### SUMMARY

A first aspect of the present invention provides a pump assembly comprising: a pump, an associated motor controller and an accelerometer mounted on said pump; said motor controller being configured to control power supplied to drive said pump and to receive data output from said accelerometer, said motor controller comprising processing circuitry configured to process said data received from said accelerometer to determine accelerations experienced at said pump due to said pump operation, said processing circuitry being operable to process data received from said accelerometer in conjunction with motor controller data so as to separate acceleration data generated by said pump operation and acceleration data that are not caused by accelerations due to pump operation; wherein said processing circuitry is configured to synchronise sampling of data signals output from said accelerometer with at least one type of said motor controller data.

The inventors of the present invention recognised that how smoothly a pump operates is an indication of its condition. An accelerometer mounted on the pump could be used to detect the smoothness of operation of the pump and how this changes with time. In particular, it could detect increases in vibrations for example, generated by operation of the pump in a non-optimal condition. Processing circuitry receiving data from such an accelerometer could be used to determine accelerations experienced at the pump due to its operation and from analysis of these signals, the condition of the pump could be estimated. Providing the processing circuitry for processing signals received from the accelerometer as part of the motor controller allows the processing circuitry to be mounted in an environment that is necessarily maintained at a temperature and position suitable for electronic circuitry as the motor controller comprises electronic motor controller circuitry. Furthermore, control signals for the control of the pump motor generated by the controller are also relevant when analysing the accelerations and this is a further advantage of mounting the processing circuitry for processing signals from the accelerometer within the motor controller.

Said processing circuitry is operable to process data received from said accelerometer in conjunction with motor controller data so as to separate acceleration data generated by said pump operation and other signals.

By providing the processing circuitry for processing the accelerometer data within the motor controller, motor controller data regarding the operation of the pump is also available and processing the accelerometer data in conjunction with this data allows accelerations experienced at the pump to be tied to different aspects of the driving of the pump, and also allows signals that are not caused by accelerations due to pump operation to be identified and separated from those that are due to such operation. In effect, by combining the acceleration and motor controller data which are both relevant to the operation of the pump and by analysing them together a better picture of its operation can be obtained.

The other signals may comprise electronic noise signals arising perhaps from switching circuitry associated with driving the pump motor or they may be accelerations detected by the accelerometer that are experienced at the pump and are due to external forces as opposed to operation of the pump itself. Being able to distinguish the accelerations that are due to pump operation, allows the operation to be more accurately analysed. Furthermore, detecting accelerations due to external factors such as the pump being knocked allows misuse to be detected.

Combining the motor controller data and the accelerometer data to allow a more accurate analysis of the acceleration is achieved by synchronizing the sampling of the accelerometer data with at least one type of the motor controller data. For example, where the driving of the motor is via a pulse width modulated drive signal, then the switching of the signal will generate noise and synchronising the sampling of the acceleration signal to a mid point of this switching where the current, for example, is at its most stable value will enable a signal with lower noise components to be sampled and thereby increase the accuracy of the analysis.

In some embodiments, said processing circuitry is operable to correlate said data received from said accelerometer with said motor controller data.

One way in which the processing circuitry may combine the accelerometer data and the motor controller data is by correlating it in some way. In this regard, where data regarding the driving of the pump motor is known, then acceleration signals at particular frequencies can be tied to the frequency of the drive motor and in this way, accelerations due to the rotation of a rotor for example, or to the slower or faster rotation of the bearing elements can be isolated and analysed.

It should be noted that the motor controller data, that is available within the motor controller, may be motor control data which is indicative of motor control signals that are generated by the motor controller to control the motor. Alternatively and/or additionally, it may be data received by at least one sensor within the motor controller which is there to sense signals such as current output to the drive of the pump, voltage output, temperature of the motor controller and/or power supplied to it.

In some embodiments, said pump comprises a rotor and said at least one sensor is for sensing rotor speed or rotor angular position.

The sensor within the motor controller may determine rotor angular position or rotor speed. Alternatively, this may be determined at the processing circuitry from motor controller data indicative of control signals sent to the motor controller. In either case, the determination of rotor angular position and rotor speed can be used by the processing circuitry in conjunction with the data received from the accelerometer to generate rotor condition data. **In** this regard, accelerations experienced at the pump at particular rotor angular positions are indicative of the rotor with increased level of unbalance and thus, such signals can be used to help reduce the level of unbalance in the rotor initially and/or they can be used during servicing or later during operation to determine where there is change in the unbalance of the rotor and it requires rebalancing.

Furthermore, the rotor speed is related to bearing elements speed, the bearing elements move at a lower or higher multiple speed of the rotor. Thus accelerations that occur at particular frequencies may be indicative of bearing wear and can be used in the analysis of bearing condition. Bearing condition is important to accurately determine to try to avoid bearings deteriorating to a point where they may damage the pump. Furthermore, worn bearings make for a noisier pump particularly on start-up and an indication of bearing wear may indicate the reason for a noisy pump.

**In** some embodiments, the processing circuitry is configured to determine acceleration amplitude and phase from the signals received.

Both the acceleration amplitude and the acceleration phase are important indicators of pump conditions and can be used in the analysis of the pump.

**In** some embodiments, said processing circuitry is configured to convert sampled data from said accelerometer to the frequency domain.

As noted previously, vibrations at certain frequencies may be indicative of different elements of the pump and thus, when analysing the data, converting periodically sampled data from the accelerometer into the frequency domain, allows accelerations occurring at particular frequencies to be easily identified and this can be helpful in the analysis of the data and in particular in fault diagnosis.

In some embodiments, said processing circuitry comprises comparison circuitry for comparing data output by said accelerometer and processed by said processing circuitry with at least one threshold value to generate at least one warning signal.

As noted previously, signals from the accelerometer are indicative of pump condition and can be used for fault diagnosis. When used in conjunction with threshold values, they can be used to generate warnings indicating that operation of the pump is moving out of normal operational limits and as such may need some servicing or repair. This may take the form of rotor rebalancing, bearing replacement and/or other actions.

These warning signals may be used in conjunction with output circuitry for outputting warning indications, said output circuitry being configured to be triggered by said warning signals.

Once it has been determined that the signals received from the accelerometer indicate it is not operating within normal limits, then the warning signal so generated may be routed to trigger a warning indicator. This warning indicator may be in the form of lights on the pump or motor controller, which may indicate the severity of the warning using colour coding, amber perhaps indicating that a check is required or servicing should be done soon and red that the pump should not be operated. Alternatively, the warning indicators may be output on a communication line from the pump to an external system where a user or operator can be provided with information regarding the event detected. A memory may also be present in the motor controller or on the pump for recording acceleration events and the warning signals may be recorded in the memory and downloaded therefrom either via the communication line or via an output port such as a USB port.

Although the accelerometer is particularly useful for determining accelerations experienced at the pump due to pump operation which are indicative of the condition of the pump, the accelerometer can also be used to detect external forces causing acceleration at the pump. Such external forces may be due to an external impact and can be detected during operation, analysis of the frequency and amplitude of the signal indicating that it is not due to normal operation. Although it is helpful to detect such events during operation, such impacts may also occur when the pump is not in operation and in fact this may be more likely as the pump may be being moved between locations. As an accelerometer is provided on the pump to determine accelerations due to operation of the pump it can also be used to detect accelerations due to other causes. In order for this to function when the pump is not in operation a remote power source such as a battery may be required and thus, one may be associated with the accelerometer such that it can operate when the pump is not powered and any accelerations it detects can be stored within a data store and can be used to detect accelerations due to external forces caused by mishandling and/or other instances which may affect the condition and future operation of the pump.

The accelerometer may be mounted directly on the pump for example, on the housing of the pump, and in which case it experiences directly accelerations felt by the pump. This may be the case where the motor controller is separate from the pump and in such a case is configured to receive data from the accelerometer mounted on the pump by at least one of a wired and wireless connection.

As noted previously, the motor controller comprises electronic circuitry and this needs to be protected from excessive vibrations and high temperatures. Thus, in some cases it may be appropriate to mount this remotely from the pump to protect it from the conditions that the pump experiences. In such a case, the accelerometer will need to be mounted on the pump so that it experiences the accelerations that the pump experiences and it can transmit data to the processor mounted within the motor controller across wired or wireless connections. Such connections will be present between the motor controller and the pump as the motor controller will need to signal to the pump to control its motor.

In other embodiments, said pump comprises a pump mechanism and a pump housing, and said motor controller is mounted within a housing that is rigidly connected to said pump housing, said accelerometer being mounted within said motor controller housing.

In some cases the motor controller is mounted directly on the housing of the pump and where it is rigidly connected to it, the accelerometer may be mounted within the motor controller itself. At such a location it will both experience the vibrations of the pump and have ease of access to motor controller data.

Although the accelerometer may comprise any detection device for detecting acceleration in at least one axis, in some embodiments it comprises a MEMS device, (a Micro Electro Mechanical System), which can detect acceleration in at least one axis. In some embodiments, a MEMS device which detects acceleration in three orthogonal axes is used. Such a device is a low cost, small, yet accurate device.

Although embodiments are suitable for use with many different types of pumps, in some embodiments the pump comprises a compressor while in other embodiments the pump comprises a vacuum pump.

Vacuum pumps are often manufactured to particularly high tolerances making their use with embodiments of the invention particularly applicable. Compressors suffer from wear of moving parts and differing servicing requirements, such that they benefit from embodiments of the invention.

Embodiments are particularly suitable for use with a turbomolecular vacuum pump as such pumps have a drive fitted to the pump in a way that provides very tight mechanical coupling between the pump mechanism and the motor controller electronics. They are also machined to high accuracy and have a very high rotational speed such that it is important that their bearings remain in good condition and that the rotor is accurately balanced.

In other embodiments, the vacuum pump comprises a dry pump. A dry pump is also suitable for embodiments as such pumps require careful maintenance of their bearings and it is important to know if they are about to fail. Such pumps generate significant vibrations and in this case, the motor controller and processing circuitry for the accelerometer may be mounted remotely from the pump.

In still other embodiments the pump comprises a rotary vane pump.

As noted above, the information from the accelerometer can be used to detect and monitor the condition of the pump and this data can be used to provide warning indicators. The data can also be input to on-board logging systems which are used to determine both use and servicing requirements of the pump. The information can also be used pre and post servicing to determine that the servicing has been correctly performed and has improved the operation of the pump.

A second aspect of the present invention provides a method of analysing data received from an accelerometer mounted on a pump comprising: receiving data output from said accelerometer; receiving motor controller data from a motor controller for controlling a drive motor of said pump; and processing said acceleration data in conjunction with said motor controller data to determine acceleration experienced at said pump due to operation of said pump and so as to separate acceleration data generated by said pump operation and acceleration data that are not caused by accelerations due to pump operation,
wherein said step of receiving data output from said accelerometer comprises sampling data signals output from said accelerometer, said sampling being synchronised with at least one type of said motor controller data.

In some embodiments, said step of processing said data comprises correlating said data received from said accelerometer with said motor controller data.

In some embodiments, said motor controller data comprises motor controller data indicative of motor control signals generated by said motor controller. Alternatively and/or additionally, said motor controller data comprises data received from at least one sensor.

Examples of said motor controller data are at least one of current output to drive said pump, voltage output to drive said pump, temperature and power.

In some embodiments, the method comprises a further step of determining at least one of rotor angular position and rotor speed from said motor controller data.

In some embodiments, the method comprises a further step of generating rotor condition data from said data received from said accelerometer and said at least one of said determined rotor angular position data and said rotor speed.

In some embodiments, the method further comprises converting data from said accelerometer to the frequency domain.

In some embodiments, the method further comprises a comparing step for comparing data output by said accelerometer and processed by said processing circuitry with at least one threshold value; and in response to said at least one threshold being reached generating a corresponding warning signal.

A third unclaimed aspect provides a computer program which when executed by a processor is operable to control said processor to form steps in a method according to a second aspect to the present invention.

Further particular and preferred aspects are set out in the accompanying independent and dependent claims. Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows a vacuum pump with motor controller and accelerometer according to a first embodiment;
Figure 2 shows a vacuum pump with accelerometer and remote motor controller according to a second embodiment;
Figure 3 shows the driving voltages and current for a vacuum pump motor; and
Figure 4 shows variations in the current supplied to the vacuum pump motor;
Figure 5 schematically shows a vacuum pump and motor controller according to a third embodiment; and
Figure 6 shows a flow diagram illustrating steps performed in the method according to an embodiment.

### DESCRIPTION OF THE EMBODIMENTS

Before discussing the embodiments in any more detail, first an overview will be provided.

An acceleration sensor (accelerometer) is embedded in a pump or in its associated motor controller electronics and the acceleration signal is processed within processing circuitry within the motor controller electronics allowing accelerations due to the operation of the pump to be analysed and the condition of the pump determined. Locating the processing circuitry within the motor controller electronics, provides a location that is suitable for such circuitry and allows easy access to the motor control signals, allowing the motor control signals and acceleration signals to be correlated providing improved information on the operation and condition of the pump. The sampling of the acceleration signal is synchronised with the other control processors in the motor controller, for example with the PWM of the output voltage.

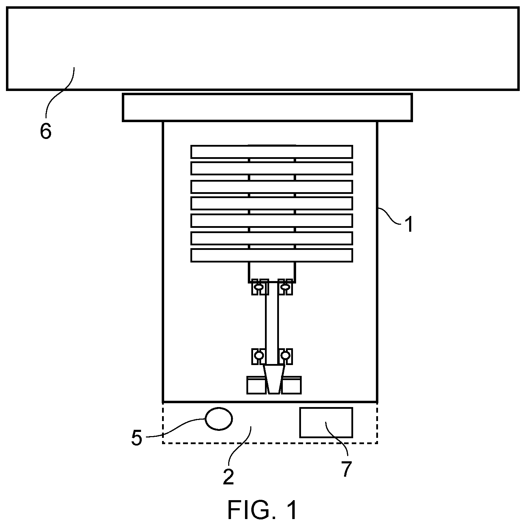

Figure 1 schematically shows a turbomolecular pump 1 connected to a vacuum system 6. Firmly mounted to the vacuum pump 1 is motor controller 2 which generates control signals for controlling the motor driving the vacuum pump rotor. Motor controller 2 has an accelerometer 5 within it and as the motor controller is rigidly attached to the vacuum pump 1, accelerations experienced by the vacuum pump due, for example, to operation of the vacuum pump will be felt by the accelerometer 5 and signals indicative of the accelerations experienced will be generated. These are output to processing circuitry 7 which analyses the signals in conjunction with information received the motor controller to determine both operation and condition of the vacuum pump.

Mounting the accelerometer within the motor controller means that it is in a position that is designed to be suitable for electronic circuitry as it is where the control circuitry of the motor controller is also located and it is also at a location that is convenient for receiving signals indicative of the driving and operation of the vacuum pump. Thus the acceleration signals and the motor control signals may be analysed in combination allowing more detailed and accurate analysis of the pump's operation.

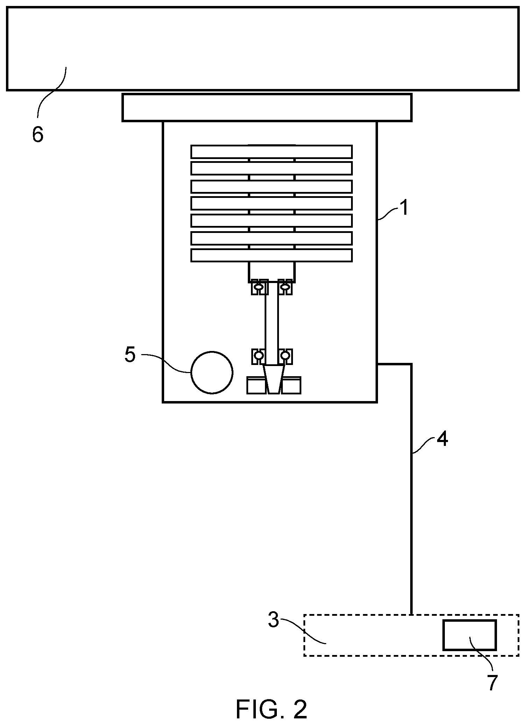

Figure 2 shows an alternative embodiment where the motor controller 3 is mounted remotely from the vacuum pump. This may be preferable where the vacuum pump generates a lot of vibrations or operates at a high temperature making it an unsuitable location for electronic circuitry. In such a situation, the accelerometer 5 is mounted within the vacuum pump housing perhaps on the vacuum pump cartridge and in this way senses accelerations experienced at the vacuum pump.

In this embodiment there is a communication link 4 between the motor controller 3 and the pump 1 to provide drive control signals to the vacuum pump motor. This link is also be used to transmit acceleration signals from the accelerometer 5 to the motor controller 3 such that these signals are received at the motor controller and can be processed by processing circuitry 7. Once again, processing circuitry 7 will process the signals from the accelerometer in conjunction with the signals from the motor controller allowing detailed analysis of operation of the vacuum pump to be performed.

In this regard, the combination of motor controller or drive and acceleration signals can be used so that accelerations experienced at particular frequencies can be related to operation of particular elements of the pump such as the bearings or the rotor and can be used to diagnose faults with these elements. Alternatively, the combination can be used to reduce noise in the signals received from the accelerometer and increase accuracy in that way.

Although the pumps shown in Figure 1 and 2 are vacuum pumps it would be clear to a skilled person that the motor controller, accelerometer, processing circuitry and motor controller electronics shown in these embodiment could be used in a similar way with any sort of pump or compressor that is driven by a motor.

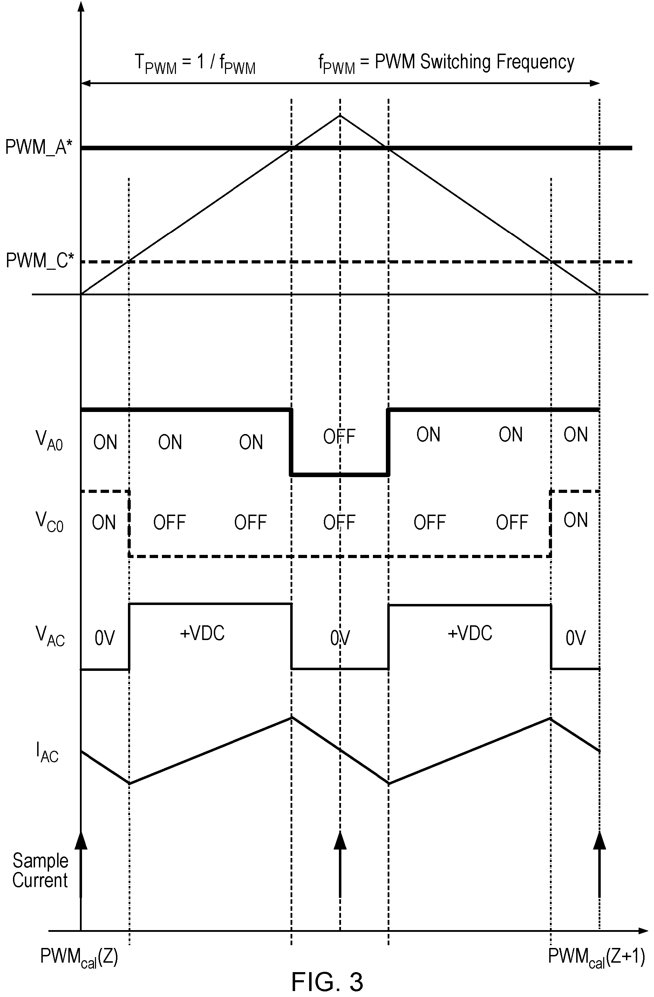

Figure 3 shows the voltage of a three phase voltage supply supplied to drive a motor of a vacuum pump using pulse switch modulation. It also shows how the current varies with these voltages. As can be appreciated, the switching of the drive voltage will generate noise signals within associated electronic circuitry due to inductive effects. When sampling current to determine current provided by this driving voltage, sample points which occur towards the mid-point of the current value which is a point that is relatively remote from a voltage switching point should be used. Thus, these waveforms provide two opportunities to sample the current, which coincide with the start and centre of the PWM cycle. Similarly, when sampling signals from the accelerometer, sample points remote from the voltage switching points should be used and thus, a knowledge of the drive signals from the motor controller allows the data from the accelerometer to be sampled in a way that reduces noise in the signals sampled and thereby allows for an increased accuracy.

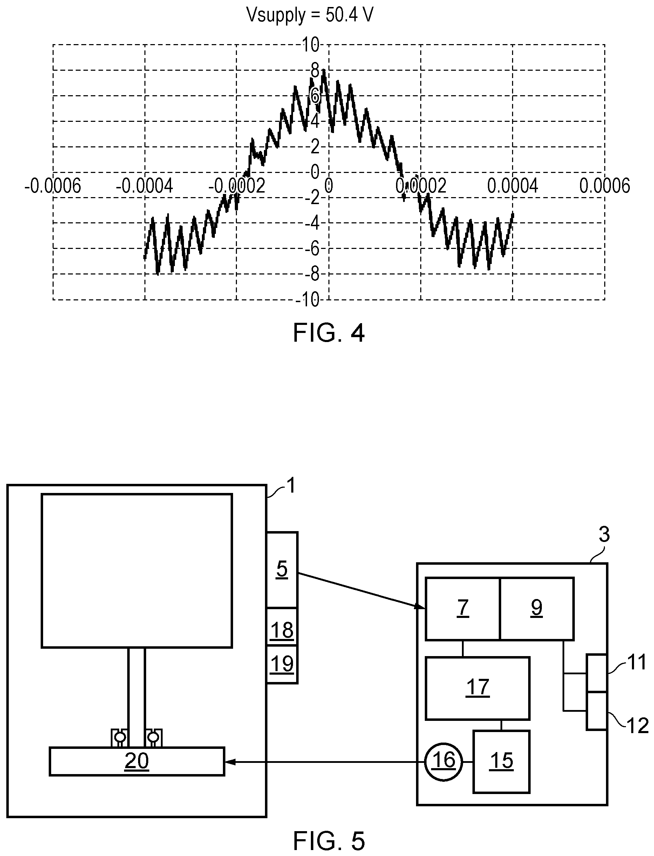

Figure 4 shows current ripple for one PWM period. These ripples occur in a generally sinusoidal signal produced by the PWM voltage and might be at 20kHz with a few of these cycles in each motor rotation. As noted with respect to Figure 3, when sampling signals from the accelerometer, it may be advantageous to sample signals towards the mid-point of changes in a current or voltage value and thus, sampling towards the mid-point of each ripple would reduce the noise in the signal due to fluctuating voltages and currents. In this way, combining signals from the motor controller circuitry with accelerometer processing can help improve the accuracy of the acceleration data that is then analysed.

Figure 5 shows a diagram of a pump 1 having motor 20 and motor controller 3. Motor controller 3 transmits control signals to motor 20 to control the driving the motor of the vacuum pump. Motor controller 3 has control circuitry 17 for generating the motor control signals and power supply 15 for providing the power to drive motor 20. In this embodiment, there is an ammeter 16 for measuring the current supplied to the motor and this transmits signals to processing circuitry 7. Accelerometer 5 mounted on the vacuum pump cartridge also transmits signals to processing circuitry 7 as does motor controller circuitry 17. Processing circuitry 7 will process these received signals to determine the condition of the vacuum pump. In this regard, it may comprise comparison circuitry 9 which compares values of monitored signals with threshold values and where thresholds are reached, it will output a warning signal to warning indicator 11 and/or to output 12. In this embodiment, warning indicator 11 comprises warning lights which are illuminated in response to the warning signal. There is a green light indicating operation is detected as being satisfactory and an orange light indicating that servicing may be required shortly and a red light indicating that the pump should not be operated.

Processing circuitry 7 may process the signals in a number of ways and may include a frequency domain convertor for converting the signals from amplitude versus time to amplitude versus frequency. This allows the peak values of acceleration amplitude at specific frequencies to be determined and these may indicate particular faults within the vacuum pump.

For example where the rotor speed is known, then accelerations detected at a frequency corresponding to this speed may indicate problems with the rotor while accelerations at a frequency corresponding to a factor of this speed may indicate bearing wear. Furthermore, where the angular position of the rotor is known then accelerations related to that position may indicate an unbalanced rotor. This can be useful when balancing the rotor using balancing screws, when the vacuum pump is being made ready for use or as an indicator that servicing is required.

The presence of an accelerometer and processing circuitry which can coordinate with the motor controller circuitry is particularly useful during pump final test and avoids the need of temporarily fitting testing circuitry to every pump that is built and tested. Tests performed involve performing a FFT (Fast Fourier Transform); results input to the threshold comparison circuitry 9 which uses a pass/fail envelope indicate whether the pump is suitable for use or not. The accelerometer may also be used in pre and post service testing where, for example, the field bearings have been changed to check that the pump has not been compromised by the field service operation and that the rotor is still in the correct position.

In addition, during normal operation, any deterioration in the pump condition may be determined from increases in acceleration values at particular frequencies and warning signals can be generated. For example, it may be used to automatically identify when the bearings need changing or to provide some early warning system that they will need replacements soon.

In addition or as an alternative to illuminating warning signals, the signals collected during analysis may also be sent to output 12, where they may be transmitted to the operator or customer to help fault finding. Where there is data logging of vacuum pump operation, the accelerometer may also provide its data to that onboard data logging system and this may be useful in recording the pump running history. This can be advantageous in identifying where particular use of the pumps may have caused damage to the pump. In effect, it may be useful for detecting abuse events where the pump has been misused.

In some embodiments, there is a battery associated with the accelerometer shown as 18 in Figure 5. This can be used to power the accelerometer and record acceleration events in data store 19 that are detected when the pump is not operational and is powered down. This can be useful in particular when the pump is being moved between operational locations, to detect events occurring during the move which may damage the pump. It should be noted that although the battery 18 and data store 19 are shown attached to the vacuum pump in Figure 5, they may also be mounted in the motor controller 3 and connected to the accelerometer 5 by wires.

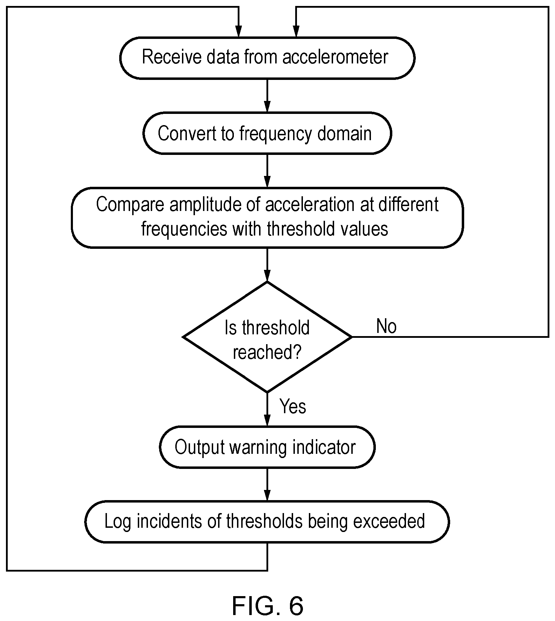

Figure 6 shows a flow diagram illustrating steps performed at processing circuitry within the motor controller by a method according to an embodiment. Data is received at the processing circuitry from an accelerometer mounted on a pump and operable to detect accelerations due to operation of the pump. The processing circuitry is operable to convert the received signals from the time domain to the frequency domain. It then compares the amplitude of accelerations detected at certain frequencies with threshold values. Where the threshold is reached then a warning indicator is output. A log of incidents of the thresholds being exceeded is also kept.

In one embodiment, analysis of the accelerations at different frequencies can be used to provide information about the condition of the pump and in particular, the contact angle and hence the preload of the rotor. This can be useful particularly after service when changes in the preload may indicate significant impeller temperature changes, which again are indicative of possible faults.

Examples of the motor controller data that may be combined with the accelerometer data are the rotational frequency measurements which can be used as an input to the final balance process. Phase and magnitude information relating to the rotor position poles from the accelerometer amplitude poles are indicative of the angular position of any unbalance. A plot of the frequency response of the system during coast down or ramp up could also be generated by the processing circuitry and used to detect critical speeds in specific issues like back-up bearing touch or rotor clash in final tests and in pump development. In this regard back-up bearings are provided to limit the movement of the drive shaft away from its normal position.

The above gives some examples of uses of a pump assembly according to an embodiment. It is particularly applicable to turbomolecular pumps as they have a drive fitted to the pump in a way that provides very tight mechanical coupling between the pump mechanism and the motor control electronics. In turbomolecular pump applications, the motor control electronics and the accelerometer are mounted rigidly to the pump as in Figure 1. Other embodiments using other pumps such as dry pumps, may use the arrangement of Figure 2 where the motor control electronics are mounted remotely from the pump to protect them from vibrations.

As processing circuitry is already present within the motor controller and as low cost accelerometers using MEMS devices are now available, the fitting of an accelerometer and processing device to such pump assemblies is very low cost and can provide much additional data, which may be transmitted to a user using existing serial communication channels.

Embodiments of the present invention which provide transmission of the collected data either wirelessly or via a communication port to a remote location, provide a way of detecting operation of the pumps which can be useful to determine operation issues such as the noisiness of the pump from this remote position. One of the most common complaints for a pump is that it is noisy but this is difficult to quantify and verify the scale of the issue without having a service personnel visit or having the pump returned. Being able to collect data from an accelerometer remotely will provide a useful indication of the size of this problem.

Furthermore, periodically pumps require bearing replacements or other service and it is difficult to predict the correct interval for preventative maintenance as these intervals can vary considerably with the customer application. Monitoring the amplitude and frequency of acceleration peaks could be used to provide early warning that maintenance is really required and also of the nature of the maintenance. This could allow service intervals to be safely extended and could provide early warnings in the cases where the bearing has deteriorated more quickly for whatever reason.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

1 Turbomolecular Vacuum Pump
2 Motor Controller (shown closely coupled to pump)
3 Motor Controller (shown remotely mounted)
4 Cable to connect pump to drive in remote mounting scenario
5 Accelerometer
6 Adjoining vacuum system
7 Processing circuitry for processing accelerometer signals
9 Comparison circuitry
11 Warning Indicator
!2 Output port
15 Power Supply
16 Ammeter
17 Motor Controller Electronics
20 Motor
18 Battery
19 Data Store

## Claims

1. A pump assembly comprising:
a pump (1), an associated motor controller (2, 3) and an accelerometer (5) mounted on said pump;
said motor controller (2, 3) being configured to control power supplied to drive said pump (1) and to receive data output from said accelerometer (5), said motor controller (2, 3) comprising processing circuitry (7) configured to process said data received from said accelerometer to determine accelerations experienced at said pump due to operation of said pump, **characterized in that** said processing circuitry is operable to process data received from said accelerometer (5) in conjunction with motor controller data so as to separate acceleration data generated by said pump operation and acceleration data that are not caused by accelerations due to pump operation; and **in that** said processing circuitry is configured to synchronise sampling of data signals output from said accelerometer with at least one type of said motor controller data.

2. A pump assembly according to claim 1, wherein a signal supplied to drive said motor (20) is a pulse width modulated drive signal, and said processing circuitry is configured to synchronise said sampling of data signals output from said accelerometer (5) to a mid point of the switching of said pulse width modulated drive signal.

3. A pump assembly according to claim 1 or 2, wherein said processing circuitry is operable to correlate said data received from said accelerometer with said motor controller data.

4. A pump assembly according to any one of claims 1 to 3, wherein said motor controller data comprises motor control data indicative of motor control signals generated by said motor controller.

5. A pump assembly according to any one of claims 2 to 4, wherein said pump comprises a rotor and said motor controller comprises at least one sensor, said motor controller data comprising data received from said at least one sensor, and wherein said at least one sensor is for sensing at least one of current output to drive said pump, voltage output to drive said pump, temperature, power; and rotor speed and rotor angular position.

6. A pump assembly according to any one of claims 1 to 5, wherein said pump comprises a rotor, and said processing circuitry is operable to determine at least one of rotor angular position and rotor speed from said motor controller data.

7. A pump assembly according to claim 5 or 6, said processing circuitry being operable to generate rotor condition data from said data received from said accelerometer and at least one of said rotor angular position data and said rotor speed.

8. A pump assembly according to any preceding claim, wherein said processing circuitry is configured to convert sampled data from said accelerometer to the frequency domain.

9. A pump assembly according to any preceding claim, wherein said processing circuitry comprises comparison circuitry for comparing data output by said accelerometer and processed by said processing circuitry with at least one threshold value to generate at least one warning signal.

10. A pump assembly according to claim 9, further comprising output circuitry for outputting warning indications, said output circuitry being configured to be triggered by said at least one warning signal.

11. A pump assembly according to any preceding claim, said pump further comprising a power source for providing power to said accelerometer, said pump comprising a data store for storing data received from said accelerometer.

12. A pump assembly according to any preceding claim wherein said motor controller is separate from said pump and configured to receive data from said accelerometer via at least one of a wired and a wireless connection.

13. A pump assembly according to any one of claims 1 to 11, wherein said pump comprises a pump mechanism and a pump housing, and said motor controller is mounted within a housing that is rigidly connected to said pump housing, said accelerometer being mounted within said motor controller housing.

14. A pump assembly according to any preceding claim, said pump comprising a compressor or a vacuum pump; wherein said vacuum pump comprising at least one of a turbo-molecular pump, a dry pump, and a rotary vane pump.

15. A method of analysing data received from an accelerometer mounted on a pump comprising:
receiving data output from said accelerometer;
receiving motor controller data from a motor controller for controlling a drive motor of said pump; and
processing said acceleration data in conjunction with said motor controller data to determine accelerations experienced at said pump due to operation of said pump and so as to separate acceleration data generated by said pump operation and acceleration data that are not caused by accelerations due to pump operation,
wherein said step of receiving data output from said accelerometer comprises sampling data signals output from said accelerometer, said sampling being synchronised with at least one type of said motor controller data.

## Patentansprüche

1. Pumpenanordnung, umfassend:
eine Pumpe (1), eine zugehörige Motorsteuerung (2, 3) und einen an der Pumpe montierten Beschleunigungsmesser (5);
wobei die Motorsteuerung (2, 3) dazu konfiguriert ist, die zum Antreiben der Pumpe (1) zugeführte Energie zu steuern und von dem Beschleunigungsmesser (5) ausgegebene Daten zu empfangen, wobei die Motorsteuerung (2, 3) eine Verarbeitungsschaltung (7) umfasst, die dazu konfiguriert ist, die vom Beschleunigungsmesser empfangenen Daten zu verarbeiten, um die an der Pumpe aufgrund des Betriebs der Pumpe festgestellten Beschleunigungen zu verarbeiten, **dadurch gekennzeichnet, dass**
die Verarbeitungsschaltung dazu betreibbar ist, von dem Beschleunigungsmesser (5) empfangene Daten zusammen mit Motorsteuerungsdaten zu verarbeiten, um durch den Pumpenbetrieb generierte Beschleunigungsdaten und Beschleunigungsdaten, die nicht durch Beschleunigungen aufgrund des Pumpenbetriebs verursacht wurden, zu trennen; und dadurch, dass
die Verarbeitungsschaltung dazu konfiguriert ist, das Abtasten von Datensignalen, die von dem Beschleunigungsmesser ausgegeben wurden, mit mindestens einem Typ der Motorsteuerungsdaten zu synchronisieren.

2. Pumpenanordnung nach Anspruch 1, wobei ein zum Antreiben des Motors (20) übermitteltes Signal ein pulsbreitenmoduliertes Antriebssignal ist und die Verarbeitungsschaltung dazu konfiguriert ist, das Abtasten von Datensignalen, die von dem Beschleunigungsmesser (5) ausgegeben wurden, auf einen Mittelpunkt des Schaltens des pulsbreitenmodulierten Antriebssignals zu synchronisieren.

3. Pumpenanordnung nach Anspruch 1 oder 2, wobei die Verarbeitungsschaltung dazu betreibbar ist, von dem Beschleunigungsmesser empfangene Daten mit den Motorsteuerungsdaten zu korrelieren.

4. Pumpenanordnung nach einem der Ansprüche 1 bis 3, wobei die Motorsteuerungsdaten Motorsteuerungsdaten umfassen, die für Motorsteuerungssignale bezeichnend sind, die von der Motorsteuerung erzeugt wurden.

5. Pumpenanordnung nach einem der Ansprüche 2 bis 4, wobei die Pumpe einen Rotor umfasst, die Motorsteuerung mindestens einen Sensor umfasst und die Motorsteuerungsdaten Daten umfassen, die von dem mindestens einen Sensor empfangen wurden, und wobei der mindestens eine Sensor zum Abtasten mindestens des zum Antreiben der Pumpe ausgegebenen Stroms, der zum Antreiben der Pumpe ausgegebenen Spannung, der Temperatur und/oder der Leistung, sowie der Rotordrehzahl und der Rotorwinkelposition dient.

6. Pumpenanordnung nach einem der Ansprüche 1 bis 5, wobei die Pumpe einen Rotor umfasst und die Verarbeitungsschaltung dazu betreibbar ist, aus den Motorsteuerungsdaten die Rotorwinkelposition und/oder die Rotordrehzahl zu bestimmen.

7. Pumpenanordnung nach Anspruch 5 oder 6, wobei die Verarbeitungsschaltung dazu betreibbar ist, aus den vom Beschleunigungsmesser empfangenen Daten und den Rotorwinkelpositionsdaten und/oder der Rotordrehzahl Rotorbedingungsdaten zu generieren.

8. Pumpenanordnung nach einem der vorhergehenden Ansprüche, wobei die Verarbeitungsschaltung dazu konfiguriert ist, vom Beschleunigungsmesser abgetastete Daten in die Frequenzdomäne zu konvertieren.

9. Pumpenanordnung nach einem der vorhergehenden Ansprüche, wobei die Verarbeitungsschaltung eine Vergleichsschaltung umfasst, um von dem Beschleunigungsmesser ausgegebene und durch die Verarbeitungsschaltung verarbeitete Daten mit mindestens einem Schwellenwert zu vergleichen, um mindestens ein Warnsignal zu generieren.

10. Pumpenanordnung nach Anspruch 9, ferner umfassend eine Ausgabeschaltung zum Ausgeben von Warnhinweisen, wobei die Ausgabeschaltung dazu konfiguriert ist, von dem mindestens einen Warnsignal ausgelöst zu werden.

11. Pumpenanordnung nach einem der vorhergehenden Ansprüche, wobei die Pumpe ferner eine Energiequelle zum Bereitstellen von Energie für den Beschleunigungsmesser umfasst, wobei die Pumpe einen Datenspeicher zum Speichern von Daten, die von dem Beschleunigungsmesser empfangen wurden, umfasst.

12. Pumpenanordnung nach einem der vorhergehenden Ansprüche, wobei die Motorsteuerung von der Pumpe getrennt und dazu konfiguriert ist, über eine kabelgebundene und/oder kabellose Verbindung Daten von dem Beschleunigungsmesser zu empfangen.

13. Pumpenanordnung nach einem Ansprüche 1 bis 11, wobei die Pumpe einen Pumpenmechanismus und ein Pumpengehäuse umfasst und die Motorsteuerung innerhalb eines Gehäuses montiert ist, das starr mit dem Pumpengehäuse verbunden ist, wobei der Beschleunigungsmesser in dem Motorsteuerungsgehäuse montiert ist.

14. Pumpenanordnung nach einem der vorhergehenden Ansprüche, wobei die Pumpe eine Verdichter- oder eine Vakuumpumpe ist; wobei die Vakuumpumpe mindestens eine Turbomolekularpumpe, eine Trockenpumpe und/oder eine Drehschieberpumpe umfasst.

15. Verfahren zum Analysieren von Daten, empfangen von einem an einer Pumpe montierten Beschleunigungsmesser, umfassend:
Empfangen von Daten, die von dem Beschleunigungsmesser ausgegeben wurden;
Empfangen von Motorsteuerungsdaten von einer Motorsteuerung zum Steuern eines Antriebsmotors der Pumpe; und
Verarbeiten der Beschleunigungsdaten zusammen mit den Motorsteuerungsdaten, um Beschleunigungen zu bestimmen, die an der Pumpe aufgrund des Betriebs der Pumpe festgestellt werden, und um durch den Pumpenbetrieb generierte Beschleunigungsdaten und Beschleunigungsdaten, die nicht durch Beschleunigungen aufgrund des Pumpenbetriebs erzeugt wurden, zu trennen,
wobei der Schritt des Empfangens von Daten, die von dem Beschleunigungsmesser ausgegeben wurden, das Abtasten von Datensignalen, die von dem Beschleunigungsmesser ausgegeben wurden, umfasst, wobei das Abtasten mit mindestens einem Typ der Motorsteuerungsdaten synchronisiert ist.

## Revendications

1. Ensemble pompe comprenant :
une pompe (1), un dispositif de commande de moteur (2, 3) associé et un accéléromètre (5) monté sur ladite pompe ;
ledit dispositif de commande de moteur (2, 3) étant configuré pour commander une puissance fournie pour entraîner ladite pompe (1) et pour recevoir des données délivrées en sortie à partir dudit accéléromètre (5), ledit dispositif de commande de moteur (2, 3) comprenant un ensemble de circuits de traitement (7) configuré pour traiter lesdites données reçues à partir dudit accéléromètre pour déterminer des accélérations subies au niveau de ladite pompe du fait du fonctionnement de ladite pompe, **caractérisé en ce que** ledit ensemble de circuits de traitement est utilisable pour traiter des données reçues à partir dudit accéléromètre (5) conjointement à des données de dispositif de commande de moteur de manière à séparer des données d'accélération générées par ledit fonctionnement de pompe et des données d'accélération qui ne sont pas provoquées par des accélérations dues au fonctionnement de pompe ; et **en ce que** ledit ensemble de circuits de traitement est configuré pour synchroniser l'échantillonnage de signaux de données délivrés en sortie dudit accéléromètre avec au moins un type desdites données de dispositif de commande de moteur.

2. Ensemble pompe selon la revendication 1, dans lequel un signal fourni pour entraîner ledit moteur (20) est un signal d'entraînement modulé en largeur d'impulsion, et ledit ensemble circuits de traitement est configuré pour synchroniser ledit échantillonnage de signaux de données délivrés en sortie dudit accéléromètre (5) à un point médian de commutation dudit signal d'entraînement modulé en largeur d'impulsion.

3. Ensemble pompe selon la revendication 1 ou 2, dans lequel ledit ensemble de circuits de traitement est utilisable pour corréler lesdites données reçues à partir dudit accéléromètre avec lesdites données de dispositif de commande de moteur.

4. Ensemble pompe selon l'une quelconque des revendications 1 à 3, dans lequel lesdites données de dispositif de commande de moteur comprennent des données de commande de moteur indicatives de signaux de commande de moteur générés par ledit dispositif de commande de moteur.

5. Ensemble pompe selon l'une quelconque des revendications 2 à 4, dans lequel ladite pompe comprend un rotor et ledit dispositif de commande de moteur comprend au moins un capteur, lesdites données de dispositif de commande de moteur comprenant des données reçues à partir dudit au moins un capteur, et dans lequel ledit au moins un capteur sert à détecter au moins un parmi un courant délivré en sortie pour entraîner ladite pompe, une tension délivrée en sortie pour entraîner ladite pompe, une température, une puissance ; et une vitesse de rotor et la position angulaire de rotor.

6. Ensemble pompe selon l'une quelconque des revendications 1 à 5, dans lequel ladite pompe comprend un rotor, et ledit ensemble de circuits de traitement est utilisable pour déterminer au moins une parmi la position angulaire de rotor et la vitesse de rotor à partir desdites données de dispositif de commande de moteur.

7. Ensemble pompe selon la revendication 5 ou 6, ledit ensemble de circuits de traitement étant utilisable pour générer des données d'état de rotor à partir desdites données reçues à partir dudit accéléromètre et au moins une parmi lesdites données de position angulaire de rotor et ladite vitesse de rotor.

8. Ensemble pompe selon une quelconque revendication précédente, dans lequel ledit ensemble de circuits de traitement est configuré pour convertir des données échantillonnées provenant dudit accéléromètre dans le domaine fréquentiel.

9. Ensemble pompe selon une quelconque revendication précédente, dans lequel ledit ensemble de circuits de traitement comprend un ensemble de circuits de comparaison pour comparer des données délivrées en sortie par ledit accéléromètre et traitées par ledit ensemble de circuits de traitement avec au moins une valeur seuil pour générer au moins un signal d'avertissement.

10. Ensemble pompe selon la revendication 9, comprenant en outre un ensemble de circuits de sortie pour la délivrance en sortie d'indications d'avertissement, ledit ensemble de circuits de sortie étant configuré pour être déclenché par ledit au moins un signal d'avertissement.

11. Ensemble pompe selon une quelconque revendication précédente, ladite pompe comprenant en outre une source d'alimentation pour fournir de l'énergie audit accéléromètre, ladite pompe comprenant un magasin de données pour stocker des données reçues à partir dudit accéléromètre.

12. Ensemble pompe selon une quelconque revendication précédente, dans lequel ledit dispositif de commande de moteur est séparé de ladite pompe et configuré pour recevoir des données à partir dudit accéléromètre via au moins une parmi une connexion filaire et une connexion sans fil.

13. Ensemble pompe selon l'une quelconque des revendications 1 à 11, dans lequel ladite pompe comprend un mécanisme de pompe et un boîtier de pompe, et ledit dispositif de commande de moteur est monté à l'intérieur d'un boîtier qui est rigidement relié audit boîtier de pompe, ledit accéléromètre étant monté à l'intérieur dudit boîtier de dispositif de commande de moteur.

14. Ensemble pompe selon une quelconque revendication précédente, ladite pompe comprenant un compresseur ou une pompe à vide ; dans lequel ladite pompe à vide comprend au moins une parmi une pompe turbomoléculaire, une pompe sèche et une pompe à palettes rotatives.

15. Procédé d'analyse de données reçues à partir d'un accéléromètre monté sur une pompe, comprenant :
la réception de données délivrées en sortie à partir dudit accéléromètre ;
la réception de données de dispositif de commande de moteur provenant d'un dispositif de commande de moteur pour commander un moteur d'entraînement de ladite pompe ; et
le traitement desdites données d'accélération conjointement auxdites données de dispositif de commande de moteur pour déterminer des accélérations subies au niveau de ladite pompe du fait du fonctionnement de ladite pompe et de manière à séparer des données d'accélération générées par ledit fonctionnement de pompe et des données d'accélération qui ne sont pas provoquées par des accélérations dues au fonctionnement de pompe,
dans lequel ladite étape de réception de données délivrées en sortie dudit accéléromètre comprend des signaux de données d'échantillonnage délivrés en sortie dudit accéléromètre, ledit échantillonnage étant synchronisé avec au moins un type desdites données de dispositif de commande de moteur.
